# EUROPEAN PATENT SPECIFICATION

(11) **EP 2 154 882 B1**
(45) Date of publication and mention of the grant of the patent: **12.12.2012**
(21) Application number: 09251950.3
(22) Date of filing: 06.08.2009
(51) Int. Cl.: H04N 5/445, H04N 7/16

(54) **Techniques for automatically distinguishing between users of a handheld device**
Techniken zur automatischen Unterscheidung zwischen Benutzern von tragbaren Vorrichtungen
Techniques pour faire une distinction automatique entre différents utilisateurs d'un dispositif portable

(30) Priority: 15.08.2008 US 192789
(43) Date of publication of application: 17.02.2010
(73) Proprietor: Intel Corporation, Santa Clara, CA 95052 (US)
(72) Inventor: Harrison, Beverly, Seattle, WA 98115 (US); Lamarca, Anthony G., Seattle, WA 98105 (US); Hightower, Jeffrey, Suquamish, WA 98392 (US); Rea Adam D., Suquamish, WA 98392 (US)
(74) Representative: Beresford, Keith Denis Lewis

(56) References cited:
- EP-A1- 1 686 804
- WO-A-2007/131069
- US-A1- 2004 137 416
- US-A1- 2006 250 213
- US-A1- 2007 073 799
- US-A1- 2007 079 137
- US-A1- 2008 004 951
- US-A1- 2008 113 787

## Description

### BACKGROUND

The importance for a media service and/or device provider (e.g., a television service provider, a consumer electronics provider, and so forth) to continuously strive to provide an increased variety of content and features to its subscribers cannot be overstated. No doubt this is one of the reasons why television service providers attempt to provide customized services or features to their subscribers including on-demand pay-per-view programming, a variety of subscription options for broadcasted programs, subscriber-defined controls such as parental controls and cable modem Internet access.

However, there are limitations to some of these types of services or features provided via the media service/device provider. For example, there are limitations to providing advertisements to a particular user along with requested content where the advertisements are tailored for the user. Often times the user is forced to watch or listen to advertisements that are of little or no interest to that user. In addition, advertising companies are paying for their advertisements to be broadcast along with the requested content, often not reaching the users that are most likely to be most interested in their advertisments.

Other limitations include uniquely identifying a person in the home so that the media-based services or features can be customized for the person. For example, the most commonly proposed automatic person identification method used in homes today involve in-home cameras and face reconogition algorithms to uniquely indentify household members. This camera-based method has two key obstacles. The first obstacle is that while face recognition has been shown to work well in environments with controlled lighting and simple static backgrounds, it does not work well in everyday environments in which lighting conditions and background clutter may vary. The second obstacle involves privacy concerns of the person. Cameras are often perceived to be one of the most privacy-invasive technologies, and thus some households are not willing to install cameras in the home.

International Patent Specification No. WO2007/131069A discloses a fuzzy logic based viewer identification system for targeting assets to be delivered to television users. The system described uses click data obtained when users select programs to modify the set being viewed. The fuzzy logic is then used in an attempt to identify individual users.

One aspect of the present invention is set out in claim 1,

### BRIEF DESCRIPTION OF THE DRAWINGS

Figure 1 illustrates one embodiment of a system.
Figure 2 illustrates one embodiment of an apparatus.
Figure 3 illustrates one embodiment of a logic flow.
Figure 4 illustrates one embodiment of a logic flow.
Figure 5 illustrates one embodiment of a logic flow.
Figure 6 illustrates one embodiment of a logic flow in accordance with the present invention.
Figure 7 illustrates one embodiment of a logic flow.

### DETAILED DESCRIPTION

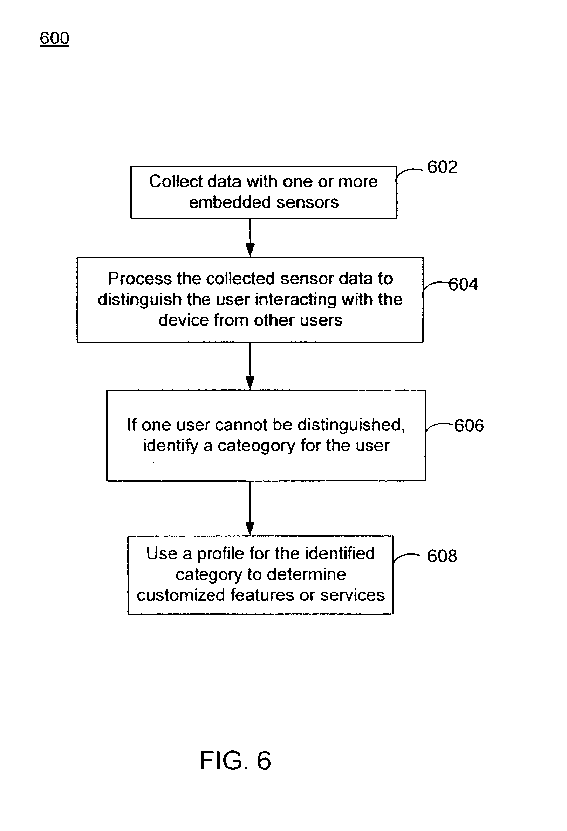

The present invention will now be described with reference to Figure 6.

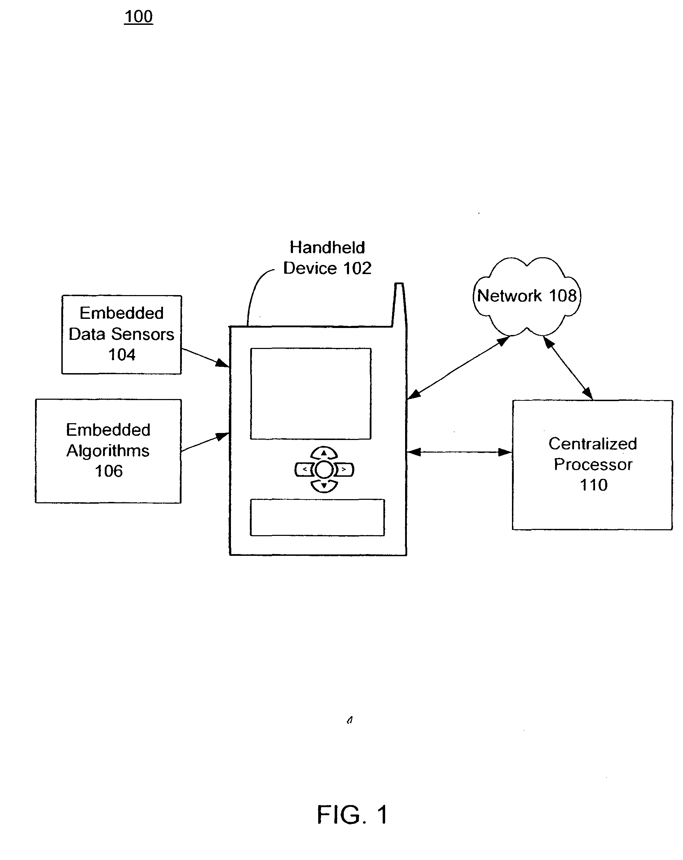

Figure 1 illustrates a system 100 for automatically distinguishing between users of a handheld device. The system 100 comprises a handheld device 102, a network 108 and a centralized processor 110. Device 102 may include one or more embedded data sensors 104 and one or more embedded algorithms 106.

At a high level, when a user holds device 102, real-time data is automatically collected for the user via data sensors 104. Once data is collected, embedded algorithms 106 processes the data to distinguish the user from other users of device 102 based on user profiles. Embedded algorithms 106 are incorporated into handheld device 102. The embedded algorithms 106 may be incorporated into centralized processor 110, for example. Here, device 102 may transmit the collected real-time data to centralized processor 110 where the embedded algorithms106 process the data in real time to distinguish the user. Once the user is identified, the invention can provide customized features or services to the user based on the user's profile.

When embedded algorithms 106 are incorporated into centralized processor 110, there are various ways in which device 102 may transmit the collected sensor data to processor 110 for further processing. Thus, device 102 may be a remote control device that is adapted to include functionalities of the present invention as is described herein. Centralized processor 110 may be a set top box (e.g., personal video recorder (PVR)). Here, handheld device 102 encodes the collected real-time data into, for example, an intra-red signal, such as one generated by a typical remote control device, to transmit the sensor data to centralized processor 110. Using infra-red signals to encode the sensor data may alleviate the need for wireless capabilities in handheld device 102. Centralized processor 102 may then extract the sensor data from the infra-red signal. Once extracted, the sensor data may be processed by embedded algorithms 106 to distinguish the user.

The device 102 may have wireless capabilities where the collected sensor data is transmitted to centralized processor 110 via network 108 (e.g., the Internet, a local area network (LAN), a wide area network (WAN), etc.). Each of these components is discussed in more detail below.

In order to address privacy concerns that users may have. For example, a user may restrict handheld device 102 regarding where personal information is stored or forwarded. Such personal information may include personal data stored in the user's profile, historical data generated from past usage of device 102 from the user, and so forth. Here, personal information may be restricted to being stored on device 102, may be restricted to being stored locally (e.g., within the home or office or building), and so forth. The user may also require that any personal information be encrypted before it is stored and/or forwarded to another device or entity. Here, encryption helps to further ensure confidentiality and privacy of personal information of users.

As described above, when a user holds handheld device 102, real-time data is automatically collected for the user via embedded data sensors 104. For example, in embodiments, embedded data sensors 104 may include one or more multi-axial accelerometers to measure activity level and orientation of device 102. Here, the manner in which device 102 is held, moved and manipulated can be profiled for each member of a household or office environment, for example.

Embedded data sensors 104 may also include surface sensors such as thermal, pressure, and capacitive sensors. Via these surface sensors, it can automatically be inferred which hand (left, right, none) is gripping device 102 and the overall hand size and shape of the user. As above, users may be profiled based on this collected data. For example, dad is likely to have a larger hand than mom or the children in the household. Dad might be right handed, whereas mom might be left handed, and so forth.

In addition, users may be profiled based on the timing and sequence of buttons they typically press on device 102 (e.g., channel surfing, preferred television channels, and so forth).

Embedded data sensors 104 may also include location technology (e.g. ultrasound, wireless network signal strength, wireless network signal time of arrival (ToA) or angle of arrival (AoA), or Radio Frequency Identification (RFID)) allowing device 102 to know its physical location. This location technology may, for example, be used to determine which room in the house device 102 is currently located. Dad might be profiled as typically watching television in the family room, whereas the children might be more likely to watch television in their bedrooms and mom in the kitchen.

Embedded data sensors 104 may include voice recognition technology. Here, information may be entered into device 102 by way of microphone. Such information may be digitized by a voice recognition device.

One or more of different types of embedded sensors may be used either individually or in combination to collect data for a user. These examples are not meant to limit the invention. In fact, the invention contemplates the use of any means to monitor a user via a handheld device.

As described above, the collected sensor data is used to distinguish a user from other users via embedded algorithms 106. The sensor data is provided to algorithms 106 in real time. However the sensors 104 may also be adapted to store real-time data via integrated long term storage, such as flash memory for example, and then transmit the data to embedded algorithms 106 at a later time. The integrated long term storage helps to ensure that no collected data are lost if there is no connection currently available with embedded algorithms 106 or an external processor, such as processor 110, for example.

The embedded algorithms 106 may include statistical reasoning algorithms, machine learning algorithms, or other heuristics. Embodiments of embedded algorithms 106 may include off-the-shelf classification algorithms (e.g., boosted decision stumps, decision trees, support vector machines, etc.). These types of algorithms are not meant to limit the invention. Embedded algorithms 106 may include any type of algorithm that is able to classifying or distinguish users via sensor data.

As described above, the collected sensor data is used to distinguish a user from other users via embedded algorithms 106. The invention also provides for situations where embedded algorithms 106, based on the collected sensor data and user profiles, are not able to distinguish one particular user over the other users. Here, for example, embedded algorithms may produce a confidence level for each user that is an indication of the likelihood that any particular user is the one handling device 102. Thresholds may be set for the confidence levels and used to generate a subset of users that might include the user handling device 102. For example, if the confidence level is above 90% for a user (that the user is the actual one handling device 102), then include the user in the subset. Then, based on the users in the subset, device 102 may generate a ranked ordered list of the users in the subset and provide this list to the user handling device 102 via a display, for example. Here, the user is provided the opportunity to provide explicit feedback to device 102 by indicating the correct user. This feedback may be used to further define the user profile and/or the embedded algorithms.

When embedded algorithms 106 are not able to uniquely distinguish a user from other users, device 102 may identify a broader category or demographic class of user such as adult versus child, male versus female, and so forth. The embedded algorithms determine attributes that differentiate the user from other users or from the general population either specifically and uniquely or categorically. Here, category or class profiles may be maintained and used to determine more generalized features or services to provide to the user.

Device 102 may be any handheld device capable of performing the functionality of the invention described herein. Device 102 may be implemented as part of a wired communication system, a wireless communication system, an infra-red system, or a combination thereof. In one embodiment, for example, device 102 may be implemented as a mobile computing device having wireless or infra-red capabilities. A mobile computing device may refer to any device which can be easily moved from place to place. In embodiments, the mobile computing device may include a processing system.

As described above the invention provides for handheld device 102 to be a typical remote control device adapted to include the functionality of the invention. The device 102 may include any handheld device that is adapted to include the functionality of the present invention, including but not necessarily limited to, a mobile internet device (MID), smart phone, handheld computer, palmtop computer, personal digital assistant (PDA), cellular telephone, combination cellular telephone/PDA, pager, one-way pager, two-way pager, messaging device, data communication device, and so forth.

System 100 may be implemented as a wireless system, a wired system, an infra-red system, or a combination thereof. When implemented as a wireless system, system 100 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 100 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth.

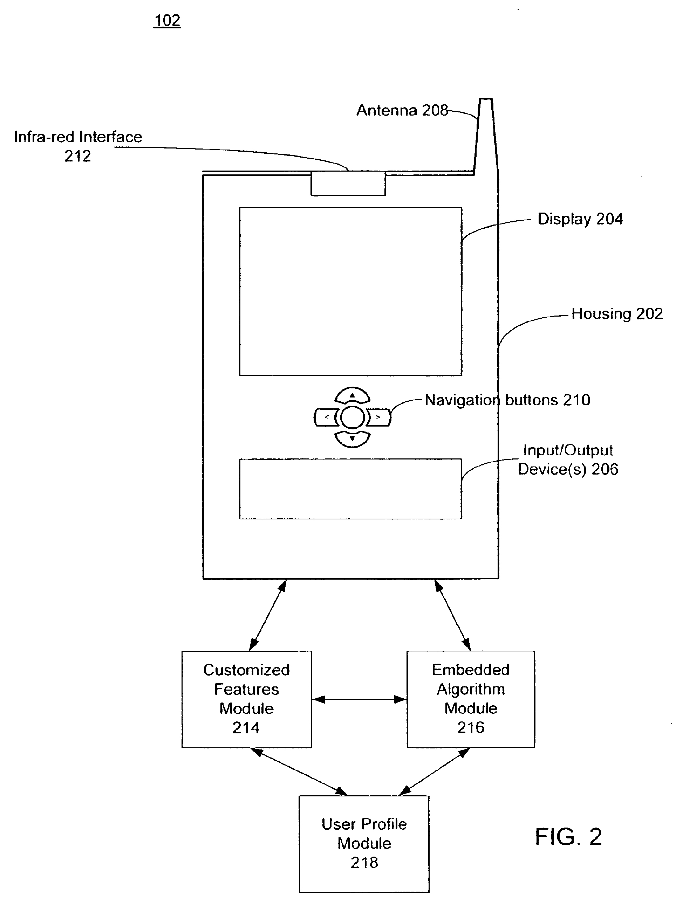

A more detailed description of an embodiment of handheld device 102 is shown in Figure 2. Referring to Figure 2, device 102 includes a housing 202, a display 204, one or more input/output devices 206, an antenna 208, navigation buttons 210, an infra-red interface 212, a customized features module 214, an embedded algorithm module 216 and a user profile module 218.

Modules 214, 216 and 218 may be directly integrated into device 102 or may be coupled to device 102 via a connection (e.g., wireless, wired or some combination of both). Note that although the functionality of modules 214, 216 and 218 is described herein as being separated into three components, this is not meant to limit the invention. In fact, this functionality may be combined into one or two components, or separated into four or more components. Additionally, one or more of modules 214, 216 and 218 may be customized for members of a family or office environment, for example. Each of the components of Figure 2 is described next in more detail.

Housing 202 may comprise any suitable housing, but typically involves a small form factor to enable device 102 to be easily held and transportable.

Display 204 may comprise any suitable display unit for displaying information appropriate for a handheld device. Display 204 may be used by the invention to display customized information to the user (e.g., user-specific reminders), customized user interfaces, to assist with input into device 102, and so forth.

I/O device(s) 206 may comprise any suitable I/O device for entering information into and receiving information from device 102. Examples for I/O device(s) 206 may include typical remote control device controls, touch screen interfaces, simple menus with icon selection, gestural manipulation of the device, a suitable alphanumeric keyboard, a numeric keypad, a touch pad, input keys, buttons, switches, rocker switches, a microphone, a speaker, voice recognition device and software, and so forth. The embodiments are not limited in this context.

Antenna 208 may be used to facilitate wireless communication with centralized processor 110 via network 108, for example.

In this embodiment navigation buttons 210 comprise an upward navigation button, a downward navigation button, a leftward navigation button, and a rightward navigation button. Navigation buttons 210 also may comprise a select button to execute a particular function on device 102.

As described above, embedded algorithm module 216 (or embedded algorithms 106 from Figure 1) processes the data sent from embedded data sensors 104 in combination with information found in user profile module 218 to distinguish the user or the user category (e.g. adult versus child) of the handler of device 102. Once identified, customized features module 214 may be used to determine customized features and/or services for the identified user.

In the embodiment, user profile module 218 stores information specific to the user. This information may be provided to device 102 by the user himself or may be profiled information learned by device 102 for the user from previous usage of the device. For example, information provided by the user may include information such as name, age, gender, hobbies, specific health conditions, physical limitations, sleeping patterns, show or television preferences, left or right handed, and so forth. Information profiled for the user via device 102 from past usage or operation of the device may include information such as hand size and/or shape, show or television preferences, television adjustment preferences, time and sequence of button presses of the device, channel surfing habits, location in house or office where the device is typically used by the user, and so forth. These examples are provided for illustration purposes only and are not meant to limit the invention.

For example, assume that user profile module 218 stores data for Dad that indicates Dad's routine includes going to bed at 10:00pm in his bedroom on the second floor of the house and getting up the following morning at 8:00am. Further assume user profile module 218 stores data for Jimmy that indicates Jimmy's routine includes going to bed at midnight in his bedroom on the third floor of the house and getting up the following morning at 10:00am. Assume further that user profile module 218 stores data that Dad's hand is approximately seven inches in length and Jimmy's hand is approximately four inches in length. Assume further that device 102 determines (via embedded data sensors 104) that it is currently being handled at 11:00pm, in Jimmy's bedroom and is being held by a hand that is approximately four inches in length. Here, device 102 via embedded algorithm module 216 is likely to be able to distinguish between Dad and Jimmy and determine that Jimmy is currently handling device 102.

Another possible example is where user profile module 218 stores data for Dad and Jimmy that indicates their past usage of device 102 and the timing of key presses on the device when they watch television. Also assume that the data in module 102 indicates that Dad typically holds device 102 for several minutes as he surfs the channels and Jimmy typically goes directly to his favorite channel. Here, device 102 via embedded algorithm module 216 is likely to be able to distinguish between Dad and Jimmy and determine which of them is currently handling device 102.

Another possible example may involve a user, for example Mom, is the only one in the household known to have Parkinson's disease (e.g., via medical data provided by Mom and stored in user profile module 218). Assume that via embedded data sensors 104 it is determined that the hand of the user holding device 102 is shaking. Here, device 102 via embedded algorithm module 216 may distinguish mom as the user currently operating device 102.

The above examples are provided for illustration purposes only and are not meant to limit the invention. The number and variety of possible identifying information that could be stored or inferred via device 102 are limitless.

As described above, once a user is identified by device 102, embodiments of the invention provide customized features or services to the user via customized features module 214 and/or user profile module 218. For example, once Jimmy is determined to be the user operating device 102, certain television channels may be dynamically locked or made unavailable to Jimmy. Here, device 102 may automatically tune the television to Jimmy's favorite channel for the particular time of day. Another possible example may include determining a user and automatically adjusting the television (e.g., volume, picture settings, etc.) for the user. Yet another possible example may involve determining a user and displaying user-specific reminders or user interfaces on the display of device 102 (e.g., display 204). Such reminders may include favorite television shows that will be broadcasted in the near future, a reminder that a favorite movie is now available to purchase via DVD or via pay-per-view, a reminder to take prescribed medications, a reminder to schedule an appointment, and so forth. Embodiments of the invention are not limited in this context.

Thus device 102 may be used to facilitate targeted advertising for a user. For example, when the user is identified and is now requesting downloaded or streamed content (e.g., a pay-per-view movie), advertisements tailored for the user may be provided by a media provider with the downloaded content.

The information collected via device 102 may be generalized and provided to media service and/or device providers to improve their future products/services. For example, information collected and aggregated from many devices 102 may be used to classify users into broad demographic categories and preferences such as female children in general are skipping over doll commercials, a growing number of adult males in California are watching soap operas during the day, and so forth. This type of information may be provided to various providers (e.g., media service, device, etc.) to improve targeted advertising, to determine which products to cancel, and so forth.

The device 102 may act differently in the background independent of whether a user is currently interacting with it. For example, device 102, based on data reflecting historical usage of device 102 in profile module 218 about each of the specific users, may cause another device, e.g., PVR, to record program recommendations customized for each person in the household based on what programs each particular person typically watches, for example.

In addition certain device-based gestures could be used as unique user logins for devices or services. In one example, device 102 may use unique combinations of button press speed and hand pressures to distinguish users for login purposes. Another example might involve the combination of a right-hand size of seven inches combined with a clockwise rotation 90 degrees and back, repeated twice in a row, could be the unique login to the television for dad. Whereas, mom's login may involve the combination of a right-hand size of five inches, and then a tilt of the device back and forward three times.

Handheld device 102 may be used to provide customized intelligent defaults to the user. For example, assume that the user wants to send a media file from a PVR to his or her PID. Device 102 may determine that here are multiple PIDs that are currently available to send the media file. If device 102 is not able to determine the specific PID for the user based on the user's profile, device 102 may provide a default list of available PIDS to allow the user to select the appropriate PID. The feedback from the user may be used to further define the user's profile and/or the embedded algorithms.

Operations of the embodiment of the invention may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof.

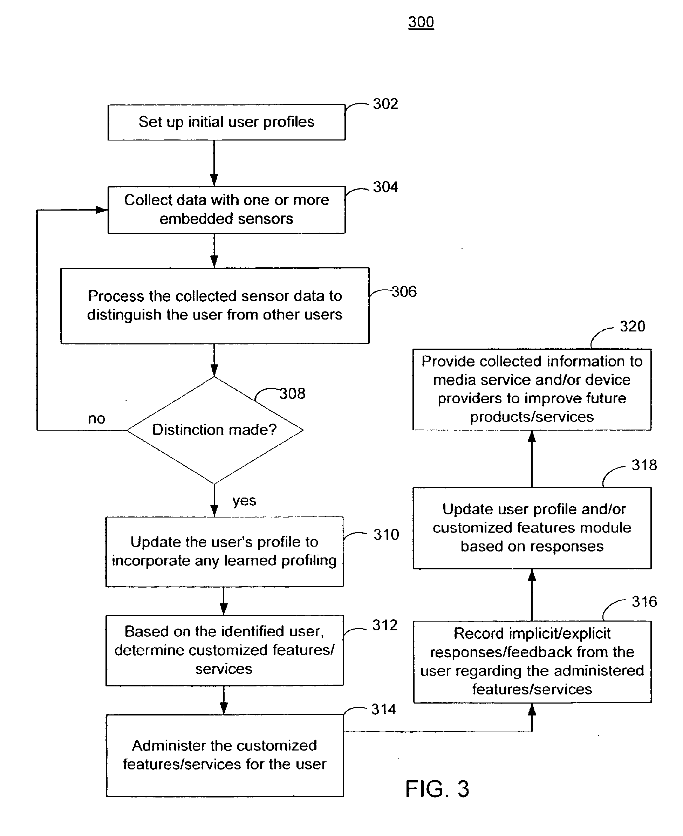

Figure 3 illustrates one embodiment of a logic flow 300. The logic flow 300 may be representative of the operations executed by one or more embodiments described herein, for example, the operations executed by system 100.

Referring to Figure 3, initial user profiles may be populated (block 302). A user's profile may be populated with initial information provided by the user, for example. As described above, subsequent data is collected from a user handling or interacting with the handheld device via embedded data sensors (such as sensors 104 in device 102 from Figures 1 and 2) (block 304).

The collected data is processed by the handheld device to distinguish a user from other users, as described above (block 306). If a distinction is made between users (block 308), then control goes back to block 304, where sensor data continues to be collected for the user. If a distinction was made (block 308), then any learned profiling may be used to update the user's profile, as described above (block 310). Customized features and/or services may be determined and administered for the user, as described above (blocks 312 and 314). In embodiments, the handheld device may administer the customized features or services itself. In other embodiments, another device, for example, may administer the features or services based on direction from the handheld device.

Thus, the handheld device may record any implicit or explicit responses or feedback from the user regarding the desirability of the administered features or services (block 316). For example, assume that the customized feature includes automatically adjusting the volume of the television for the user. The user may explicitly indicate to the device that the adjusted volume is just right via the push of a "great feature button", for example. The user may also implicitly indicate to the device that the adjusted volume is not right by manually readjusting the television volume. The recorded implicit or explicit responses may be used to update the profile and/or customized features modules (such as modules 214 and 218 in Figure 2) (block 318)

As described above, the collected information may be provided to media service and/or device providers to improve their future products or services (block 320).

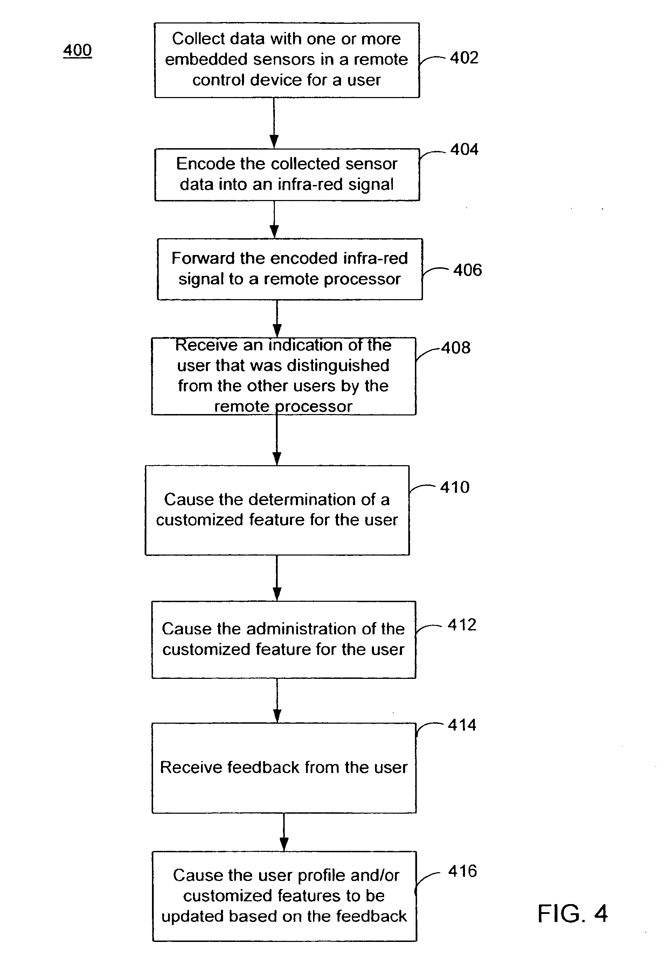

Figure 4 illustrates a logic flow 400. The logic flow 400 may be representative of the operations executed by system 100.

Referring to Figure 4, a remote control device collects sensor data for a user interacting with the remote control device (block 402). As described above, the remote control device may be adapted to include at least some of the functionality of the present invention described herein. Thus, the remote control device may be adapted to include at least one embedded data sensor.

The remote control device then encodes the collected sensor data into an infra-red signal (block 404). The encoded infra-red signal is then forwarded to a remote or centralized processor (block 406). As described above, the remote or centralized processor may be a PVR, for example. The remote processor accesses the encoded sensor data and distinguishes the user from other users of the handheld device based on the sensor data, at least one machine learning algorithm and a user profile.

Once a distinction for a user made, an indication of the user is sent from the remote processor to the remote control device (block 408). The remote control device may then cause the determination and administration of a customized feature for the user (blocks 410 and 412). As described above, the remote control device may receive feedback from the user based on the administered feature (block 414). This may be explicit or implicit feedback. Based on the feedback, the remote control device may cause the user's profile and/or customized features to be updated (block 416).

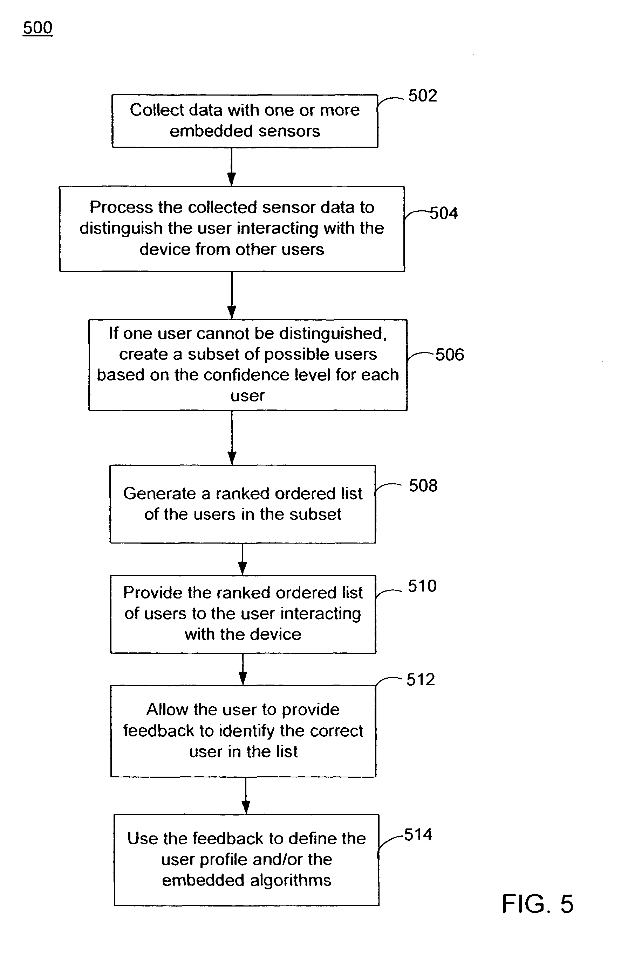

Figure 5 illustrates a logic flow 500. The logic flow 500 may be representative of the operations executed by system 100.

Referring to Figure 5, sensor data is collected from the user interacting with the handheld device with one or more embedded sensors (block 502). The collected data are processed to distinguish the user from other users (block 504).

If one user cannot be distinguished, create a subset of possible users based on the confidence level for each user (block 506). As described above, if the confidence level is above a certain threshold for a user then include the user in the subset.

Then, based on the users in the subset, a ranked ordered list of the users in the subset may be generated (block 508). The ranked ordered list may be provided to the user currently interacting with the device (block 510). The user is then allowed to provide feedback to the device to identify the correct user in the list (block 512). The feedback may be used to define the user profile and/or the embedded algorithms (block 514).

Figure 6 illustrates an embodiment of a logic flow 600 in accordance with the present invention. The logic flow 600 may be representative of the operations executed by system 100.

Referring to Figure 6, sensor data is collected from the user interacting with the handheld device with one or more embedded sensors (block 602). The collected data are processed to distinguish the user from other users (block 604).

If one user cannot be distinguished, identify a category for the user (block 606). In embodiments, this category is a broader category or class of user such as adult versus child, male versus female, and so forth. Use a profile for the identified category to determine customized features and/or services to be administered (block 608).

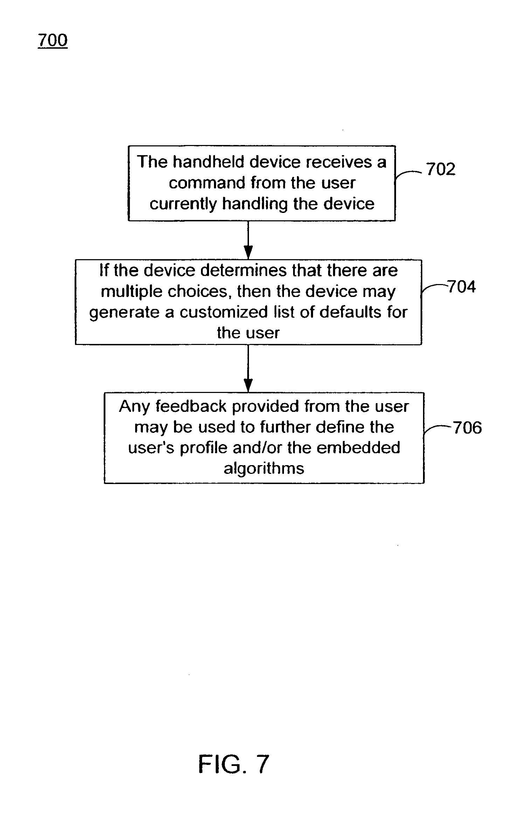

Figure 7 illustrates another logic flow 700. The logic flow 700 may be representative of the operations executed by one or more embodiments described herein, for example, the operations executed by system 100.

Referring to Figure 7, the handheld device receives a command from the user currently handling the device (block 702). For example, assume that the user wants to send a media file from a PVR to his or her PID. If the device determines that there are multiple choices, then the device may generate a customized list of defaults for the user (block 704). In the example, the device may determine that here are multiple PIDs that are currently available to send the media file. If the device is not able to determine the specific PID for the user based on the user's profile, the device may provide a default list of available PIDS to allow the user to select the appropriate PID. Any feedback provided from the user may be used to further define the user's profile and/or the embedded algorithms (block 706).

The present invention may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

A machine-readable or computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium, computer-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

Graphics and/or video processing techniques described herein may be implemented in various hardware architectures. For example, graphics and/or video functionality may be integrated within a chipset. Alternatively, a discrete graphics and/or video processor may be used. As still another embodiment, the graphics and/or video functions may be implemented by a general purpose processor, including a multicore processor. In a further embodiment, the functions may be implemented in a consumer electronics device.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

## Claims

1. A method of identifying a user of a handheld device in order to provide the user with customized services, the method comprising the steps of:
collecting sensor data from a user interacting with a handheld device, wherein the sensor data is collected via embedded sensors in the handheld device;
processing the collected sensor data to distinguish the user interacting with the device from other users
**characterised in that**,
if the user cannot be distinguished from other users, determining a category for the user, and
using a profile for the determined category to determine a feature for the user, wherein the feature is customized for the determined category.

2. A system comprising a handheld device (102) having means to cooperate via a wireless communication system (108) with an electronic processor unit (110) so that a user can issue commands to the processor unit by means of control elements provided on the device, and **characterised in that** the device (102) has
means for collecting sensor data from a user interacting with a handheld device, wherein the sensor data is collected via embedded sensors in the handheld device;
means for processing the collected sensor data to distinguish the user interacting with the device from other users
**characterised by** further comprising;
determining means adapted to determine a category for the user if the user cannot be distinguished from other users, and
means for using a profile for the determined category to determine a feature for the user, wherein the feature is customized for the determined category.

## Patentansprüche

1. Verfahren zum Identifizieren eines Benutzers eines Handgeräts, um dem Benutzer angepasste Dienste zur Verfügung zu stellen, mit folgenden Schritten:
Gewinnen von Sensordaten von einem Benutzer, der mit einem Handgerät umgeht, wobei die Sensordaten über eingebettete Sensoren in dem Handgerät gewonnen werden,
Verarbeiten der gewonnenen Sensordaten, um den mit dem Gerät umgehenden Benutzer von anderen Benutzern zu unterscheiden,
**dadurch gekennzeichnet, dass**
eine Kategorie für den Benutzer bestimmt wird, wenn dieser nicht von anderen Benutzern unterschieden werden kann, und
für die bestimmte Kategorie ein Profil verwendet wird, um für den Benutzer ein Merkmal zu bestimmen, das für die bestimmte Kategorie angepasst ist.

2. System, das ein Handgerät (102) mit einer Einrichtung, um über ein drahtloses Kommunikationssystem (108) mit einer elektronischen Prozessoreinheit (110) zusammenzuwirken, so dass ein Benutzer mittels am Gerät vorgesehener Steuerelemente Befehle an die Prozessoreinheit abgeben kann, umfasst und **dadurch gekennzeichnet ist, dass** das Gerät (102) Folgendes aufweist:
eine Einrichtung zum Gewinnen von Sensordaten von einem Benutzer, der mit einem Handgerät umgeht, wobei die Sensordaten über eingebettete Sensoren in dem Handgerät gewonnen werden,
eine Einrichtung zum Verarbeiten der gewonnenen Sensordaten, um den mit dem Gerät umgehenden Benutzer von anderen Benutzern zu unterscheiden,
weiterhin **gekennzeichnet durch**:
eine Bestimmungseinrichtung zum Bestimmen einer Kategorie für den Benutzer, wenn dieser nicht von anderen Benutzern unterschieden werden kann, und
eine Einrichtung zum Verwenden eines Profils für die bestimmte Kategorie, um für den Benutzer ein Merkmal zu bestimmen, das für die bestimmte Kategorie angepasst ist.

## Revendications

1. Procédé d'identification de l'utilisateur d'un dispositif portatif afin d'offrir à l'utilisateur des services personnalisés, le procédé comprenant les étapes consistant :
à collecter des données de capteur provenant d'un utilisateur interagissant avec un dispositif portatif, où les données de capteur sont collectées par des capteurs intégrés dans le dispositif portatif ;
à traiter les données de capteur collectées pour distinguer l'utilisateur interagissant avec le dispositif d'autres utilisateurs
**caractérisé par** le fait,
de déterminer une catégorie pour l'utilisateur si l'utilisateur ne peut pas être distingué des autres utilisateurs, et
d'utiliser un profil pour la catégorie déterminée afin de déterminer une caractéristique pour l'utilisateur, où la caractéristique est personnalisée pour la catégorie déterminée.

2. Système comprenant un dispositif portatif (102) ayant un moyen destiné à coopérer via un système de communication sans fil (108) avec une unité de traitement électronique (110) de sorte que l'utilisateur puisse émettre des commandes à l'unité de traitement au moyen d'éléments de commande prévus sur le dispositif, et **caractérisé en ce que** le dispositif (102) possède
un moyen pour collecter des données de capteur à partir d'un utilisateur interagissant avec un dispositif portatif, où les données de capteur sont collectées par des capteurs intégrés dans le dispositif portatif ;
un moyen pour traiter les données de capteur collectées pour distinguer l'utilisateur interagissant avec le dispositif d'autres utilisateurs
**caractérisé en ce qu'**il comprend en outre ;
un moyen de détermination adapté pour déterminer une catégorie pour l'utilisateur si l'utilisateur ne peut être distingué des autres utilisateurs, et
un moyen pour utiliser un profil pour la catégorie déterminée afin de déterminer une caractéristique pour l'utilisateur, où la caractéristique est personnalisée pour la catégorie déterminée.
